# EUROPÄISCHE PATENTANMELDUNG

(11) **EP 1 179 296 A2**
(43) Veröffentlichungstag der Anmeldung: **13.02.2002**
(21) Anmeldenummer: 01103160.6
(22) Anmeldetag: 10.02.2001
(51) Int. Cl.: A01M 31/06

(54) **Vorrichtung zur Simulation einer lebenden Taube**

(30) Priorität: 08.08.2000 DE 20013571 U
(71) Anmelder: Golly, Uwe, 45279 Essen (DE)
(72) Erfinder: Golly, Uwe, 45279 Essen (DE)
(74) Vertreter: Spalthoff, Adolf, Dipl.-Ing.

(57) **Zusammenfassung**

Eine Vorrichtung zur Simulation einer lebenden Taube hat eine Aufnahme (1, 2, 3, 4), mittels der der Körper einer erlegten Taube aufnehm- und präsentierbar ist und die den Flügeln der erlegten Taube zugeordnete Flügelhalter (2, 3) aufweist.

Um die Vorrichtung zur Simulation einer lebenden Taube so zu gestalten, daß mit ihr Tauben, insbesondere Wildtauben, besser angelockt werden können, wird vorgeschlagen, daß die Flügelhalter (2, 3) in bezug auf die Aufnahme (1, 2, 3, 4) so bewegbar angeordnet sind, daß mittels ihnen und der in ihnen ruhenden Flügel der erlegten Taube die Flügelbewegung einer anfliegenden Taube nachbildbar ist.

## Beschreibung

Die Erfindung bezieht sich auf eine Vorrichtung zur Simulation einer lebenden Taube mit einer Aufnahme, mittels der der Körper einer erlegten Taube aufnehm- und präsentierbar ist und die den Flügeln der erlegten Taube zugeordnete Flügelhalter aufweist.

Mit derartigen Vorrichtungen zur Simulation einer lebenden Taube, sog. Taubentrappen, sollen insbesondere Wildtauben an Stellen gelockt werden, an denen der Abschuß dieser Wildtauben unter besonders günstigen Umständen stattfinden kann. Der Abschuß solcher Wildtauben ist während bestimmter Zeiträume erforderlich, da diese Wildtauben den Bestand an noch auf dem Feld befindlichen landwirtschaftlichen Produkten reduzieren.

Die bisher bekannten Vorrichtungen zur Simulation einer lebenden Taube bzw. Taubentrappen sind oftmals nicht geeignet, weitere Wildtauben anzulocken, da sie offensichtlich von noch lebenden Wildtauben als Attrappen od.dgl. identifiziert werden können.

Der Erfindung liegt die Aufgabe zugrunde, eine Vorrichtung zur Simulation einer lebenden Taube zu schaffen, mittels der Tauben, insbesondere Wildtauben, besser angelockt werden können.

Diese Aufgabe wird erfindungsgemäß dadurch gelöst, daß die Flügelhalter der Aufnahme der Vorrichtung zur Simulation einer lebenden Taube in bezug auf die Aufnahme so bewegbar angeordnet sind, daß mittels ihnen und der in ihnen ruhenden Flügel der erlegten Taube die Flügelbewegung einer anfliegenden Taube nachbildbar ist. Bei durchgeführten Versuchen hat sich herausgestellt, daß dadurch, daß die Flügelbewegung einer anfliegenden Taube und damit eine anfliegende Taube mittels der erfindungsgemäßen Vorrichtung nahezu perfekt simuliert werden kann, noch lebende Tauben, insbesondere Wildtauben, viel besser an die gewünschte Stelle gelockt werden können als das bei bekannten Vorrichtungen zur Simulation einer lebenden Taube möglich ist.

Vorteilhaft sind die Flügelhalter an jeweils einem Stützarm fixiert, der seinerseits zwischen einer oberen Hochstellung, in der er mit der Horizontalen einen positiven Winkel bildet, und einer niedrigen Tiefstellung, in der er mit der Horizontalen einen negativen Winkel bildet, verstellbar ist. Durch Bewegung der Stützarme können somit die Flügelhalter und damit die von den Flügelhaltern gehalterten Flügel der erlegten bzw. toten Taube, insbesondere Wildtaube, in einfacher Weise bewegt werden.

Zweckmäßigerweise sind die beiden Stützarme an ihren einander zugewandten Endabschnitten mittels eines ihnen gemeinsamen Schwenkzapfens zueinander verschwenkbar miteinander verbunden. Durch gegensinniges Verschwenken der beiden Stützarme um den Schwenkzapfen können dann die Bewegungen der beiden Flügel der erlegten Taube erzeugt werden, die erforderlich sind, um den Anflug einer noch lebenden Taube zu simulieren.

Vorteilhaft ist der beiden Stützarmen gemeinsame Schwenkzapfen in Vertikalrichtung bewegbar.

Um die Bewegung der Stützarme und damit der Flügelhalter definiert ausführen zu können, ist es zweckmäßig, wenn die beiden Stützarme jeweils in ihrer Längsrichtung verschieblich an einer Lagerplatte gehaltert sind.

Die Längsverschieblichkeit der beiden Stützarme ist in technisch-konstruktiv wenig aufwendiger Weise realisierbar, wenn jeder Stützarm ein Langloch aufweist, in das jeweils ein lagerplattenseitiger Führzapfen vorsteht.

Zur vertikalen Verstellung des Schwenkzapfens und der sich hieraus aufgrund der Halterung der Stützarme an der Lagerplatte ergebenden Schwenkbewegungen der beiden Stützarme ist es vorteilhaft, wenn der beiden Stützarmen gemeinsame Schwenkzapfen an einem Endabschnitt eines Stellarms angeordnet ist, der seinerseits in Vertikalrichtung bewegbar ist.

Zur Erzeugung der Vertikalbewegung des Stellarms ist dieser an seinem schwenkzapfenfreien Endabschnitt zweckmäßigerweise mit einem Exzenterzapfen eines drehbaren Ausgangsglieds eines Elektromotors verbunden. Durch die Kreisbewegung des Exzenterzapfens läßt sich der Stellarm und mit diesem der den beiden Stützarmen gemeinsame Schwenkzapfen in Vertikalrichtung bewegen, so daß die zur Simulation der Flügelbewegung einer anfliegenden Taube erforderliche Schwenkbewegung der beiden Stützarme in vergleichsweise einfacher Weise erzeugt werden kann.

Als Elektromotor kann vorteilhaft ein einfacher Grillmotor od.dgl. vorgesehen sein.

Zur weiteren Verbesserung der Simulation einer anfliegenden Taube ist es vorteilhaft, wenn der Stellarm oberhalb des Schwenkzapfens ein Halteglied für den Hals bzw. Kopf der erlegten Taube aufweist, wobei dann auch der Hals bzw. der Kopf der toten bzw. erlegten Taube mittels der erfindungsgemäßen Vorrichtung bewegt werden kann.

Gemäß einer vorteilhaften Ausführungsform der erfindungsgemäßen Vorrichtung zur Simulation einer lebenden Taube ist auf der dem Stellarm abgewandten Seite der Lagerplatte eine Halteschale für den Rumpf der erlegten Taube angeordnet.

Um eine störungsfreie Bewegung des den beiden Stützarmen gemeinsamen Schwenkzapfens in konstruktiv-technisch wenig aufwendiger Weise zu gewährleisten, ist in der Oberkante der Lagerplatte eine Ausnehmung ausgebildet, in der der die beiden Stütz- und den Stellarm verbindende Schwenkzapfen bewegbar ist.

Der Elektromotor der erfindungsgemäßen Vorrichtung und sein drehbares Ausgangsglied können vorteilhaft auf unterschiedlichen Seiten der Lagerplatte angeordnet sein, wobei sie zweckmäßigerweise mittels einer Übertragungswelle verbunden sind, die eine Öffnung der Lagerplatte durchragt.

Im folgenden wird die Erfindung anhand einer Ausführungsform unter Bezugnahme auf die Zeichnungen näher erläutert. Es zeigen:
- Figur 1: eine perspektivische Explosionsdarstellung einer Ausführungsform der erfindungsgemäßen Vorrichtung zur Simulation einer lebenden Taube;
- Figur 2: eine Vorderansicht der in Figur 1 gezeigten Vorrichtung zur Simulation einer lebenden Taube, wobei sich Flügelhalter der Vorrichtung in einer Hochstellung befinden; und
- Figur 3: eine Figur 2 entsprechende Darstellung der erfindungsgemäßen Vorrichtung, wobei sich Flügelhalter der Vorrichtung in einer Tiefstellung befinden.

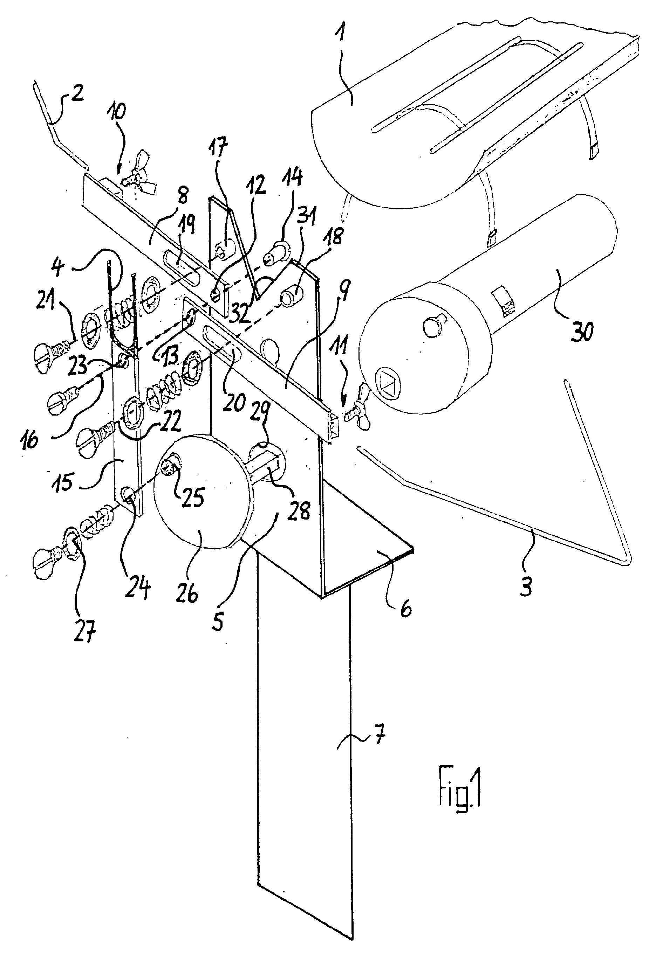

Eine anhand der Figuren 1 bis 3 dargestellte Vorrichtung zur Simulation einer lebenden Taube hat in der dargestellten Ausführungsform eine dreiteilige Aufnahme für den Körper einer bereits erlegten Taube.

Zu dieser Aufnahme gehören eine lediglich in Figur 1 teilweise dargestellte Halteschale 1, zwei Flügelhalter 2, 3 sowie ein Halteglied 4.

Die Halteschale 1 dient dazu, den Rumpf der erlegten Taube aufzunehmen. Entsprechend fungieren die Flügelhalter 2, 3 der Aufnahme als Aufnahmeelemente für die beiden Flügel der bereits erlegten Taube. Mittels des Halteglieds 4 wird der Hals bzw. der Kopf der bereits erlegten Taube gehaltert.

Da die Aufnahme 1, 2, 3, 4 so beschaffen sein soll, daß mittels ihr die Flügelbewegung einer anfliegenden Taube nachgebildet werden kann, sind die vorstehend genannten Bestandteile der Aufnahme, nämlich die Halteschale 1, die Flügelhalter 2, 3 und das Halteglied 4 in der im folgenden beschriebenen Weise zueinander angeordnet bzw. miteinander verbunden.

Die Halteschale 1 ist in geeigneter Weise an der Rückseite einer vertikal angeordneten Lagerplatte 5 vorgesehen. Die Lagerplatte 5 ist an ihrem unteren Ende mit einem abgewinkelten Ansatz 6 versehen, der auf einen in beliebiger Länge ausbildbaren Standfuß 7 aufgesetzt ist.

An der Vorderseite der Lagerplatte 5 sind bewegbar zwei Stützarme 8, 9 angeordnet, wobei der Stützarm 8 mittels einer Schraubverbindung 10 mit dem Flügelhalter 2 und der Stützarm 9 mittels einer Schraubverbindung 11 mit dem Flügelhalter 3 verbunden ist. Die Verbindung zwischen den Stützarmen 8, 9 und den Flügelhaltern 2, 3 ist derart ausgeführt, daß die Flügelhalter 2, 3 sich gemeinsam mit den Stützarmen 8, 9 bewegen.

Die Schraubverbindungen 10, 11 sind an den äußeren Enden der Stützarme 8, 9 vorgesehen.

An ihren einander zugewandten inneren Endabschnitten sind die beiden Stützarme 8, 9 jeweils mit einer Bohrung 12, 13 versehen. Durch die Bohrungen 12, 13 der Stützarme 8, 9 ragt ein Schwenkzapfen 14, der Bestandteil einer die beiden Stützarme 8, 9 miteinander und mit einem Stellarm 15 verbindenden Schraubbolzenverbindung 16 ist.

Um den Schwenkzapfen 14, der seinerseits durch den Stellarm 15 bewegbar ist, sind die Stützarme 8, 9 und die damit verbundenen Flügelhalter 2, 3 schwenkbar.

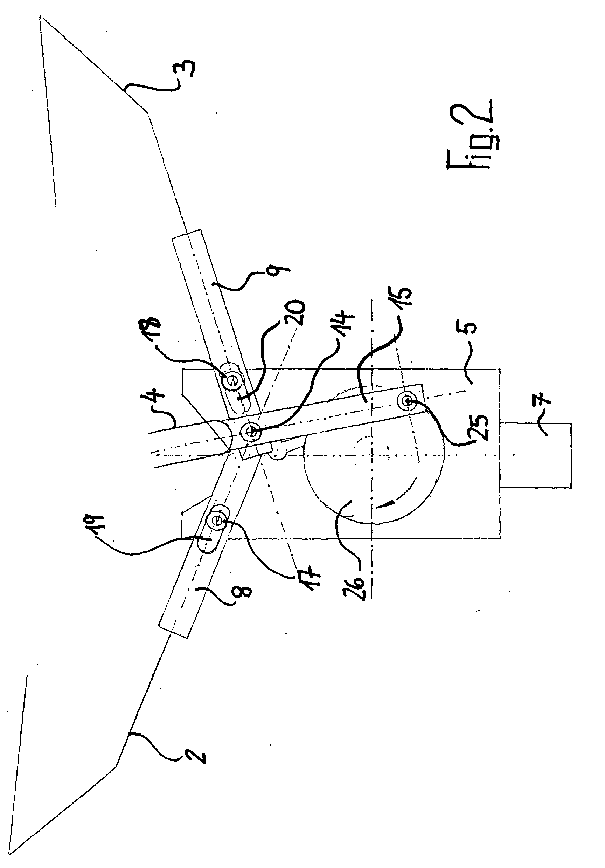

In Figur 2 sind die beiden Stützarme 8, 9 sowie die damit verbundenen Flügelhalter 2, 3 in einer oberen Hochstellung gezeigt, in denen die Stützarme 8, 9 im Vergleich zur Horizontalen in auswärtiger Richtung nach oben geneigt sind.

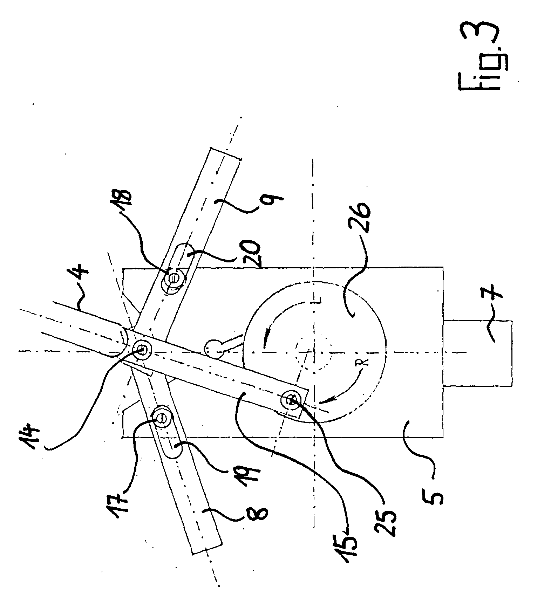

In Figur 3 sind die Stützarme 8, 9 in einer niedrigen Tiefstellung gezeigt, in der die Stützarme 8, 9 in auswärtiger Richtung in bezug auf eine Horizontale nach unten geneigt sind. Entsprechendes gilt selbstverständlich für die in Figur 2 gezeigten Flügelhalter 2, 3, die mit den Stützarmen 8, 9 fest verbunden sind.

Um die Schwenkbewegung der Stützarme 8, 9 definiert durchzuführen, weist die Lagerplatte 5 auf ihrer Vorderseite zwei Führzapfen 17, 18 auf, die in den Stützarmen 8, 9 ausgebildete Langlöcher 19, 20 durchragen und Bestandteil einer weiteren Schraubbolzenverbindung 21 bzw. 22 sind. Bei der Schwenkbewegung der beiden Stützarme 8, 9 in bezug auf den ihnen gemeinsamen Schwenkzapfen 14 sowie bei der Bewegung des Schwenkzapfens 14 mittels des im folgenden noch zu beschreibenden Stellarms 15 wandern die beiden Stützarme 8, 9 in bezug auf die ihre Langlöcher 19, 20 durchragenden Führzapfen 17, 18 an der Vorderseite der Lagerplatte 5.

Der vorstehend bereits erwähnte Stellarm ist an seinem in Figur 1 oberen Ende mit einer Bohrung 23 versehen, die mit den Bohrungen 12, 13 der beiden Stützarme 8, 9 fluchtet und die ebenfalls von dem Schwenkzapfen 14 durchragt wird. Oberhalb der Bohrung 23 ist der Stellarm 15 bei dem in den Figuren 1 bis 3 dargestellten Ausführungsbeispiel der erfindungsgemäßen Vorrichtung einstückig mit dem Halteglied 4 versehen, welches den Hals bzw. den Kopf der erlegten Taube haltert.

Des weiteren weist der Stellarm an seinem in den Figuren 1 bis 3 unteren Ende eine weitere Bohrung 24 auf, die von einem Exzenterzapfen 25 durchragt wird. Der Exzenterzapfen 25 ist Bestandteil einer den Stellarm 15 schwenkbar an einem Ausgangsglied 26 fixierenden weiteren Schraubbolzenverbindung 27.

Das Ausgangsglied 26 ist auf der Vorderseite der Lagerplatte 5 angeordnet und mittels einer Übertragungswelle 28, die eine Öffnung 29 in der Lagerplatte 5 durchragt, in Rotationsverbindung mit einem als Grillmotor ausgebildeten Elektromotor 30, der auf der Rückseite der Lagerplatte 5 in einem Bereich unterhalb der dort ebenfalls vorgesehenen Halteschale 1 angeordnet ist.

In der Oberkante 31 der Lagerplatte 5 ist eine Ausnehmung 32 ausgebildet, in der der Schwenkzapfen 14 bewegbar ist.

Bei Einschaltung des als Grillmotor ausgebildeten Elektromotors 30 wird mittels der Übertragungswelle 28 das Ausgangsglied 26 in Rotationsbewegung versetzt. Der im Bereich des Außenumfangsrands des kreisförmigen Ausgangsglieds 26 angeordnete Exzenterzapfen 25 bewegt sich auf einer Kreisbahn und versetzt den Stellarm 15 in eine entsprechende Schwenk- bzw. Kurbelbewegung. Mit dem dem Exzenterzapfen 25 gegenüberliegenden Endabschnitt des Stellarms 15 wandert der Schwenkzapfen 14, wodurch die mittels der Führzapfen 17, 18 und der Langlöcher 19, 20 an der Vorderseite der Lagerplatte 5 verstellbar positionierten Stützarme 8, 9 in Schwenkbewegungen versetzt werden. Hierbei schwenken die Stützarme 8, 9 zwischen der in Figur 2 gezeigten oberen Hochstellung und der in Figur 3 gezeigten niedrigen Tiefstellung.

Da sich die Flügelhalter 2, 3 mit den Stützarmen 8, 9 entsprechend bewegen, wird durch die Inbetriebnahme des als Grillmotor ausgebildeten Elektromotors 30 die Flügelbewegung einer anfliegenden Taube nachgebildet.

## Patentansprüche

1. Vorrichtung zur Simulation einer lebenden Taube, mit einer Aufnahme (1, 2, 3, 4), mittels der der Körper einer erlegten Taube aufnehm- und präsentierbar ist und die den Flügeln der erlegten Taube zugeordnete Flügelhalter (2, 3) aufweist, **dadurch gekennzeichnet, daß** die Flügelhalter (2, 3) in bezug auf die Aufnahme (1, 2, 3, 4) so bewegbar angeordnet sind, daß mittels ihnen und der in ihnen ruhenden Flügel der erlegten Taube die Flügelbewegung einer anfliegenden Taube nachbildbar ist.

2. Vorrichtung nach Anspruch 1, bei der die Flügelhalter (2, 3) an jeweils einem Stützarm (8, 9) fixiert sind, der seinerseits zwischen einer oberen Hochstellung, in der er mit der Horizontalen einen positiven Winkel bildet, und einer niedrigen Tiefstellung, in der er mit der Horizontalen einen negativen Winkel bildet, verstellbar ist.

3. Vorrichtung nach Anspruch 2, bei der die beiden Stützarme (8, 9) an ihren einander zugewandten Endabschnitten mittels eines ihnen gemeinsamen Schwenkzapfens (14) zueinander verschwenkbar miteinander verbunden sind.

4. Vorrichtung nach Anspruch 3, bei der der beiden Stützarmen (8, 9) gemeinsame Schwenkzapfen (14) in Vertikalrichtung bewegbar ist.

5. Vorrichtung nach einem der Ansprüche 2 bis 4, bei der die beiden Stützarme (8, 9) jeweils in ihrer Längsrichtung verschieblich an einer Lagerplatte (5) gehaltert sind.

6. Vorrichtung nach Anspruch 5, bei der jeder Stützarm (8, 9) ein Langloch (19, 20) aufweist, in das jeweils ein lagerplattenseitiger Führzapfen (17, 18) vorsteht.

7. Vorrichtung nach einem der Ansprüche 3 bis 6, bei der der beiden Stützarmen (8, 9) gemeinsame Schwenkzapfen (14) an einem Endabschnitt eines Stellarms (15) angeordnet ist, der in Vertikalrichtung bewegbar ist.

8. Vorrichtung nach Anspruch 7, bei der der Stellarm (15) an seinem schwenkzapfenfreien Endabschnitt mit einem Exzenterzapfen (25) eines drehbaren Ausgangsglieds (26) eines Elektromotors (30) verbunden ist.

9. Vorrichtung nach Anspruch 8, bei der der Elektromotor (30) als Grillmotor od.dgl. ausgebildet ist.

10. Vorrichtung nach einem der Ansprüche 7 bis 9, bei der der Stellarm (15) oberhalb des Schwenkzapfens (14) ein Halteglied (4) für den Hals bzw. Kopf der erlegten Taube aufweist.

11. Vorrichtung nach einem der Ansprüche 7 bis 10, bei der auf der dem Stellarm (15) abgewandten Seite der Lagerplatte (5) eine Halteschale (1) für den Rumpf der erlegten Taube angeordnet ist.

12. Vorrichtung nach einem der Ansprüche 7 bis 11, bei der in der Oberkante (31) der Lagerplatte (5) eine Ausnehmung (32) ausgebildet ist, in der der die beiden Stütz-(8, 9) und den Stellarm (15) verbindende Schwenkzapfen (14) bewegbar ist.

13. Vorrichtung nach einem der Ansprüche 8 bis 12, bei der der Elektromotor (30) und sein drehbares Ausgangsglied (26) auf unterschiedlichen Seiten der Lagerplatte (5) angeordnet und mittels einer Übertragungswelle (28), die eine Öffnung (29) der Lagerplatte (5) durchragt, miteinander verbunden sind.
